# EUROPEAN PATENT APPLICATION

(11) **EP 2 789 323 A2**
(43) Date of publication of application: **15.10.2014**
(21) Application number: 14163633.2
(22) Date of filing: 04.04.2014
(51) Int. Cl.: A61H 33/02, E03B 1/04

(54) **Water spraying apparatus having water saving function**

(30) Priority: 09.04.2013 TW 102206353
(71) Applicant: Nasouh, Hasan Bashar, 110 Taipei City (TW)
(72) Inventor: Nasouh, Hasan Bashar, 110 Taipei City (TW)
(74) Representative: Lang, Christian

(57) **Abstract**

A water spraying apparatus having water saving function, comprising: a pressurized motor and a nozzle. Wherein, a part of said pressuring motor is embedded into a water pipe. Said pressuring motor is provided with a motor bobbin, to receive power to rotate; a rotation disc, rotates synchronously with said pressurized motor; and a plurality of pistons, brought into motion by said rotation disc. Through reciprocal movement of said plurality of pistons, water and air is pressured into said water pipe, so that water and air in said water pipe is transported to said nozzle.

## Description

### BACKGROUND OF THE INVENTION

### FIELD OF THE INVENTION

The present invention relates to a water spraying apparatus having a water-saving function, and in particular to a water saving nozzle, that exerts pressure on the water pipe through a pressuring motor, to raise pressure in the water pipe, and to increase flushing force while reducing water consumption. The present invention is used for washing and cleaning purpose, such as bathing, washing hands, cleaning of sanitary equipment, and car washing.

### THE PRIOR ARTS

In general, clean water is used extensively in our daily life, such as washing hands, washing face, taking a bath, washing cars or flushing toilets, such that each person usually consumes about 100∼300 liters of water a day.

In places or countries of sufficient water supply, there is not much limit on the use of water for cleaning. On the contrary, in countries of dry climate or draught, it is necessary to have a certain limit on the use of water.

At present, water-saving nozzles are available in the market, its working principle is to reduce amount of water output from the nozzle, to avoid excessive use of water. In this approach, the water output speed is not sufficient to remove the contaminant (such as oil stain). As such, in order to achieve real cleaning, a user must spend more water and time to rub and flush, thus not being able to realize efficient water saving.

Therefore, presently, the design and performance of water spraying apparatus is not quite satisfactory, and it has much room for improvement.

### SUMMARY OF THE INVENTION

A major objective of the present invention is to provide a water spraying apparatus having water saving function, and the difference of this water spraying apparatus with the conventional water spraying apparatuses in that, the water spraying apparatus of the present invention exerts pressure on the air, then sprays the pressured air with water to outside. Since in this process, air replaces water of the same volume, while increasing pressure in the water pipe, hereby reducing water amount utilized and raising flushing force

To achieve the objective mentioned above, the water spraying apparatus having water saving function of the present invention includes a pressurizing motor and a nozzle.

In one aspect of the present invention, a part of the pressuring motor is embedded into a water pipe.

In another aspect of the present invention, the pressuring motor is provided with a motor bobbin, a rotation disc, and a plurality of pistons.

In a yet another aspect of the present invention, the motor bobbin utilizes the electric power received to rotate. The rotation disc is connected to the motor bobbin in a synchronous rotation manner. One end of the plurality of pistons is pressed against the surface of the rotation disc, such that through the rotation of the rotation disc, to make the plurality of pistons to move reciprocally in a certain distance. Wherein, the reciprocal movements of the plurality of pistons exert pressure on and push the air in that certain distance into the water pipe, to transport water and air together in the water pipe.

In a further aspect of the present invention, the nozzle and the water pipe are connected and in communication with each other.

### BRIEF DESCRIPTION OF THE DRAWINGS

FIG. 1 is a perspective view of a pressurizing motor used in a water spraying apparatus having water saving function according to the present invention;
FIG. 1a is an inner planar view of a pressurizing device of a pressuring motor of FIG. 1 according to the present invention;
FIG. 2 is a side exploded view of a first nozzle used in a water spraying apparatus having water saving function according to the present invention;
FIG. 3a is side exploded view of a second nozzle used in a water spraying apparatus having water saving function according to the present invention;
FIG. 3b is a top view of a connection head in a second nozzle according to the present invention;
FIG. 3c is a perspective view of a second nozzle after it is assembled according to the present invention;
FIG. 4a is a side exploded view of a third nozzle used in a water spraying apparatus having water saving function according to the present invention;
FIG. 4b is a bottom planar view of an inner cover in a third nozzle according to the present invention;
FIG. 5 is a schematic view of a water spraying apparatus having water saving function placed in bath / sanitary equipment according to the present invention;
FIG. 6 is a schematic view of a multi-function nozzle used in a bath / sanitary equipment of FIG. 5 according to the present invention;
FIG. 7 is a schematic view of a water purification system used in cooperation with a water spraying apparatus having water saving function according to the present invention; and
FIG. 8 is a schematic view of a water spraying apparatus having water saving function used in water drainage pipe according to the present invention.

### DETAILED DESCRIPTION OF THE PREFERRED EMBODIMENT

The purpose, construction, features, functions and advantages of the present invention can be appreciated and understood more thoroughly through the following detailed description with reference to the attached drawings.

### First Preferred Embodiment

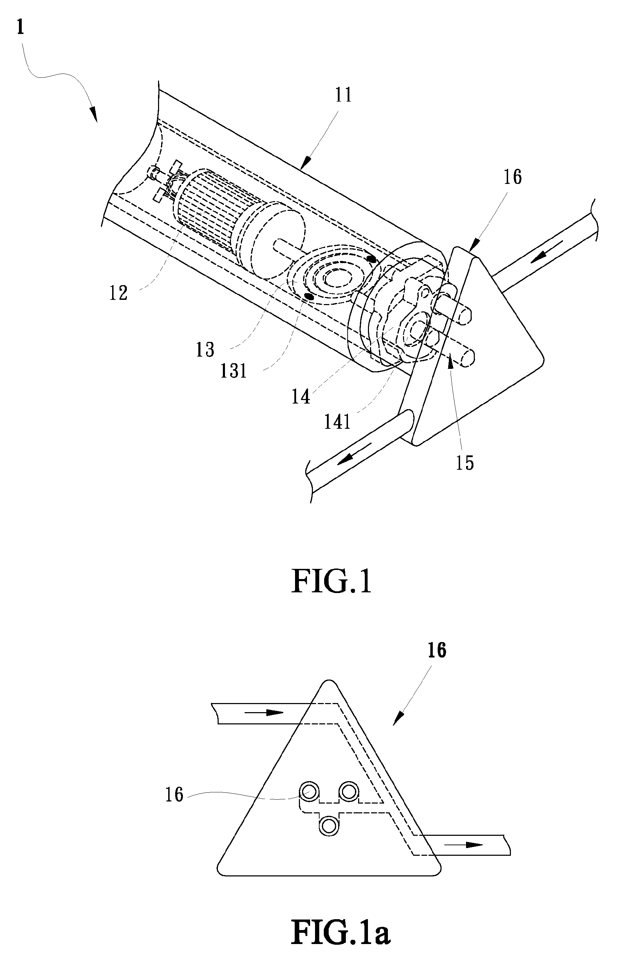

Firstly, refer to Fig s. 1, 1a and 2 respectively for a perspective view of a pressurizing motor used in a water spraying apparatus having water saving function according to the present invention; an inner planar view of a pressurizing device of a pressuring motor of FIG. 1 according to the present invention; and a side exploded view of a first nozzle used in a water spraying apparatus having water saving function according to the present invention.

As shown in the drawings, the water spraying apparatus having water saving function includes a pressurizing motor 1 and a first nozzle 2. Wherein, the pressurizing motor 1 is in communication with a first nozzle 2 through a water pipe (not shown).

As shown in FIG. 1, the pressurizing motor 1 is controlled by a control circuit (not labeled). The pressurizing motor 1 includes:
a shell 11, a motor bobbin (motor bobbin) 12, a rotation disc 13, a piston restricting seat 14, and a plurality of pistons 15, and a pressuring device 16.

The motor bobbin 12 is placed in the shell 11 in a rotation way, to receive the power from the control circuit to rotate.

The rotation disc 13 is placed in the shell 11 in a rotation way. The rotation disc 13 is connected and fixed to one side of the motor bobbin 12 through a rotation rod (not labeled), so that when the motor bobbin 12 is rotated, it will bring the rotation disc 13 into rotation together. It is worth to note that, the surface of the rotation disc 13 is disposed slantwise, so that the direction of the surface of the rotation disc 13 is changed constantly during rotation. Moreover, a set of magnets 131 of the same or opposite magnetic polarity are embedded in the surface of the rotation disc 13, to rotate along together with the rotation disc 13 in rotation.

The piston restricting seat 14 is fixed to one side of the shell 11, and is provided with a plurality of channels 141 connected to and in communication with the receiving space in the shell 11.

Each of the piston 15 is placed in the respective channel 141, and one end of each piston 15 is pressed against the surface of the rotation disc 13 by means of an elastic mechanical piece (not shown). As such, when the rotation disc 13 is rotated, the respective pistons 15 make reciprocal movement asynchronously.

The elastic mechanical piece can be a spring, and it can be placed on the piston restricting seat 14 or the respective pistons 15 based on design requirement. The restoring force of the spring is used to press one end of the respective pistons 15 against the surface of the rotation disc 13. It is worth to note that, one end of the piston 15 is provided with a magnet, and depending on design requirement, the magnet of the rotation disc 13 and the magnet of the piston 15 can be made to be magnetically attractive or repulsive. Through the magnetic attraction or repulsion, the pistons 15 can be made to move smoothly. As such, the friction force between the rotation disc 13 and the plurality of pistons 15 is reduced, thus decreasing the vibration during the operation of the pressuring motor 1, and prolonging the service life of the pressuring motor 1.

As shown in Figs 1 and 1a, the pressuring device 16 is connected and fixed to one side of the piston restricting seat 14, and it is provided with a plurality of compression channels 141 for the plurality of pistons 15 to enter. The plurality of compression channels 141 are in communication with water pipe, and the connection portion of the plurality of compression channels 141 and the water pipe is provided with one or a plurality of one-way valve (not shown), for allowing air to enter the water pipe, yet disallowing water or air in the water pipe to enter into the plurality of compression channels 141 in a reverse direction. It is worth to note that, the way of communication between the plurality of compression channels 141 and the water pipe is not restricted to the arrangement as shown in FIG. 1a, any arrangement of communication between the plurality of compression channels 141 and the water pipe belongs to the scope of the present invention. When the plurality of pistons 15 is making reciprocal movement, the other ends of the plurality of pistons 15 will compress and push the air in the plurality of compression channels 141, to enter the water pipe through the on-way valve. Then, the air and water will be transported to the first nozzle 2 through the water pipe. In the following, the embodiment of the present invention will be described. Wherein, the air mention is the compressed air, and that is pressure used for the high pressure water spray.

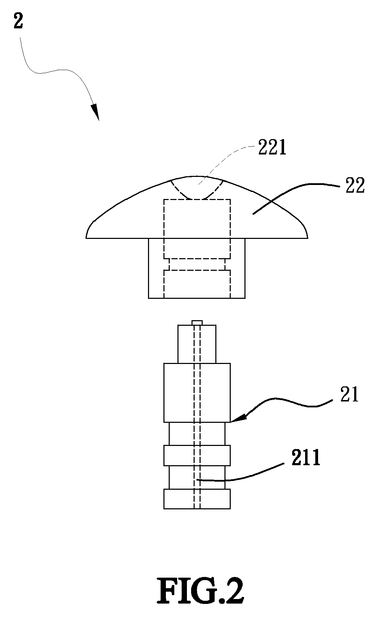

As shown in FIG. 2, the first nozzle 2 includes a first connection head 21 and a first connection cover 22.

The first connection head 21 is provided with a water channel 211 inside. One end of the first connection head 21 is connected to a water pipe in a sleeve approach, so that the water channel 211 of the first connection head 21 is connected and in communication with the water pipe.

The first connection cover 22 is sleeved onto the other end of the first connection head 21 by the locking of screw threads. In addition, the first connection cover 22 is provided with an opening 221 for outputting water, to form a divergent structure from inside to outside, so that the mixed air and water is sprayed from the first nozzle 2 in a radiation manner.

It is worth to note that, the inner structure of the first nozzle 2 is designed to form no evident obstacle to the water and air flowing through, such that the water spray out direction is dependent on the shape of the opening 221.

### Second Preferred Embodiment

In addition to the arrangement and cooperation of a pressuring motor 1 and the first nozzle 2. The first nozzle 2 can be replaced with other types of nozzles based on actual requirement.

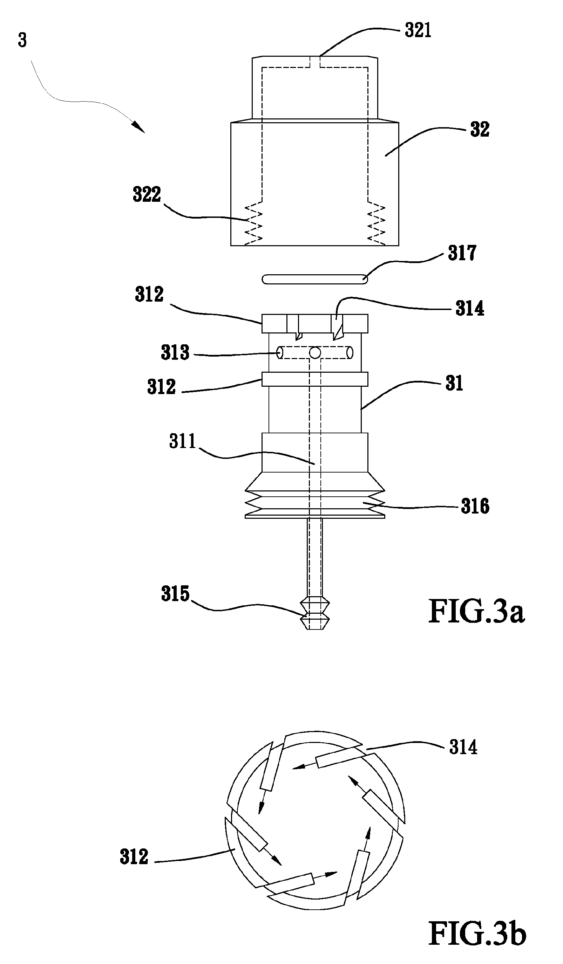

Refer to Figs. 3a and 3b respectively for a side exploded view of a second nozzle used in a water spraying apparatus having water saving function according to the present invention; and a top view of a connection head of a second nozzle according to the present invention. In the present embodiment, the water spraying apparatus having water saving function includes a pressuring motor 1 and a second nozzle 3, connected together through a water pipe.

The second nozzle 3 includes a second connection head 31 and a second connection cover 32, connected together by the locking of screw threads.

Inside the second connection head 31 is provided with a plurality of water channels 311. Between the two blocking rings 312 outside is provided with a plurality of offshoot openings 313 in an encircling manner, so that the plurality of offshoot openings 313 are in communication with the plurality of water channels 311. It is worth to note that, among the blocking rings 312, for the blocking ring 312 disposed on one end of the second connection head 31, a plurality of cutouts 314 are formed around the rim of the ring. One end of plurality of cutouts 314 is extended between the blocking rings 312, while the other end is extended to the end surface of the second connection head 31, as shown in FIG. 3b. From the planar side view of one end of the second connection head 31, it can be known that, the plurality of cutouts 314 are disposed in a ring shape periodically. The function of the plurality of cutouts 314 will be described later. In addition, the other end of the second connection head 31 is provided with wave-shape slip resistance surface 315, for the water pipe to sleeve on, and it is not easy to detach due to friction force. Moreover, certain portion on the surface of the second connection head 31 is provided with threads 316 for locking and fixing, to connect the second connection cover 32.

The surface of the second connection cover 32 is penetrated and provided with a through hole 321 connected to inside of the cover. Certain portion on the inner wall of the second connect cover 32 is provided with threads 322, so that the second connection head 31 can be placed inside the second connection cover 32. As such, the second connection cover 32 and the second connection head 31 can be connected together through using threads 316 and 322 in a rotation way to avoid detachment. It is worth to note that, after the second connection head 31 is connected to the second connection cover 32, the inside of the second nozzle 3 is divided into two cavities: the first cavity (not shown), and the second cavity (not shown). The first cavity is a ring shape cavity, and is disposed between the inner wall of the second connection cover 32, and the blocking ring 312. The second cavity is disposed between one end of the second connection head 31, and the inner side top surface of the second connection cover 32. Then, through the plurality of cutouts 314, the first cavity and the second cavity are connected and in communication. Since the second connection head 31 and the second connection cover 32 are connected in a rotation way, the second cavity utilizes this rotation mechanism to adjust the distance between one end of the second connection head 31, and the inner side top surface of the second connection cover 32, so as to adjust the size of the second cavity.

However, in the process of utilizing the second nozzle 3, water and air may leak in the gap between the second connection head 31 and the second connection cover 32, due to insufficient tight connection between the second connection cover 32 and the second connection head 31. In order to avoid water and air leakage from the second nozzle 3, the second connection head 31 located below the first cavity can be sleeved an elastic ring 317. As such, through using the elastic ring 317 sandwiched between the second connection head 31, and the inner wall of the second connection cover 32, water and air can be prevented from leaking from the first cavity. Further, the elastic ring 317 can reduce further the friction between the second connection head 31 and the second connection cover 32, to prolong the service life of the second nozzle 3.

Upon receiving water and air by the second nozzle 3 from the pressuring motor 1, the water and air is filled into the first cavity through the plurality of offshoot openings 313. When the first cavity is completely filled, the water and air is guided into the second cavity through the plurality of cutouts 314. As shown in FIG. 3b, the plurality of cutouts 314 are so disposed that, when water and air enters the second cavity, it produces spiral-shape water flow in the second cavity. When the second cavity is filled with water flow, it is ejected and sprayed out from the through hole 321 in a spiral way.

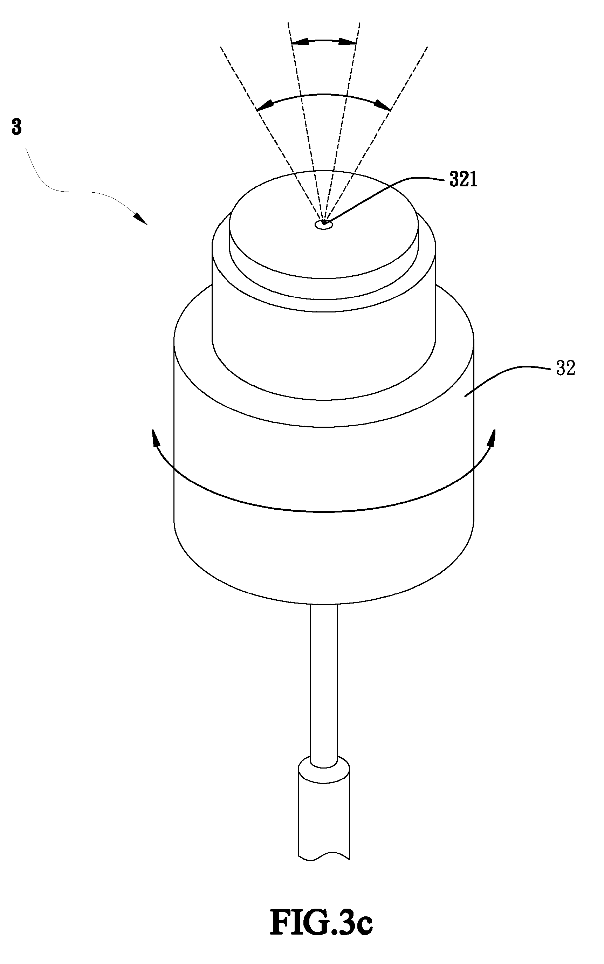

Moreover, refer to FIG. 3c for a perspective view of a second nozzle after it is assembled according to the present invention. As shown in FIG. 3c, a user is allowed to adjust the second nozzle 3 in a rotation way, to adjust the size of the second cavity, in achieving adjusting water spraying angle of the second nozzle 3.

### Third Preferred Embodiment

In addition to the first embodiment utilizing the pressuring motor 1 and the first nozzle 2, and the second embodiment utilizing the pressuring motor 1 and the second nozzle 3, in other applications, nozzles 2 and 3 can be replaced with other nozzles.

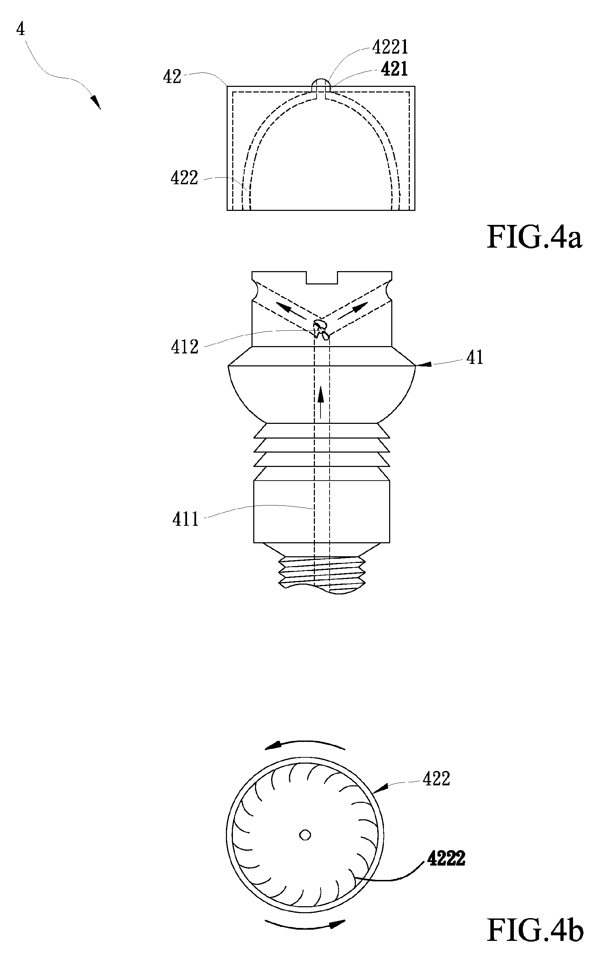

Refer to Figs. 4a and 4b respectively, for a side exploded view of a third nozzle used in a water spraying apparatus having water saving function according to the present invention; and a bottom planar view of an inner cover in the third nozzle according to the present invention. As shown in Figs. 4a and 4b, the water spraying apparatus having water saving function includes the pressuring motor 1 and the third nozzle 4, connected together through a water pipe.

The third nozzle 4 includes a third connection head 41 and a third connection cover 42, connected together by means of sleeving.

Inside the third connection head 41 is provided with a Y-shape water channels 411, as shown in FIG. 4a. Wherein, one branch is used to receive water and air of the water pipe, while the other two branches are used as offset and output. It is worth to note that, the Y-shape water channels 411 is provided with a turbine 412, and is placed in the offshoot of the Y-shape water channels 411 in a rotation manner. With regard to the functions of the turbine 412, that will described later.

Inside the third connection cover 42 is provided with a penetrating and restricting hole 421 connected to inside the cover, and inside the cover is provided with an inner cover 422. On the top end of the inner cover 422 is provided with a pellet-shape portion 4221. The pellet-shape portion 4221 is penetrated with a hole (not labeled) connected to the inside of the cover. The pellet-shape portion 4221 is restricted in the restricting hole 421, and can be rotated in a specific direction, and can be pivotally rotated in a specific direction. In other words, the inner cover 422 can be rotated and swayed in the third connection cover 42.

As shown in FIG. 4b, on the inner wall of the inner cover 422 is provided with a plurality of encircling blades 4222, as the force exerting plane for pushing the inner cover 422 to rotate and sway. With regard to the functions of the blade 4222, that will described later.

The third connection cover 42 is connected securely to one end of the third connection head 41 through threads (not shown), while the output end of the Y-shape water channels 411 is placed inside the inner cover 422. The blade 412 is rotated through the driving push of water and air. In the rotation process, air and water is guided selectively into various different branches for output based on the position of blades of the turbine 412. Therefore, the Y-shape water channels 411 output the water and air in an asynchronous manner, and then push the plurality of blades 4222, to make the inner cover 422 to rotate and sway. In operation, when the inner cover 422 accumulates sufficient air and water, the water and air will be sprayed out spirally through the hole in the inner cover 422, hereby raising the washing force of water through the driving force of spiral movement of water.

When the third nozzle 4 receives water and air coming from the pressuring motor, water and air will pass through the Y-shape water channels 411, so that the blade 412 will be pushed by water and air to rotate, and then distributed selectively to the respective branches for output based on the position of the blades 412.

### The Application of the Present Invention

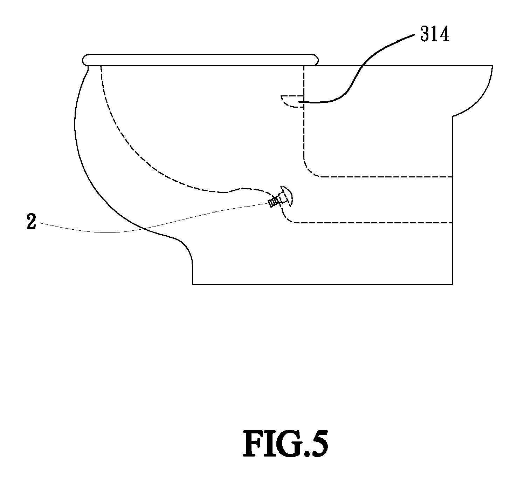

Refer to FIG. 5 for a schematic view of a water spraying apparatus having water saving function placed in bath / sanitary equipment according to the present invention. As shown in FIG.5, the present invention can be used in a bath / sanitary equipment, such as a toilet. For example, a first nozzle 2 can be placed in the indented slot in communication with the water releasing channel, while the pressuring motor 1 can be placed in the water tank (not shown) of the toilet in communication with the first nozzle 2, to provide the first nozzle 2 the spraying water to wash the contaminants accumulated in the indented slot of the toilet. In addition, in order to obtain a more through sanitation, on the wall of indent slot of the toilet can be disposed a diffusion nozzle 5, to be used in cooperation with the first nozzle 2.

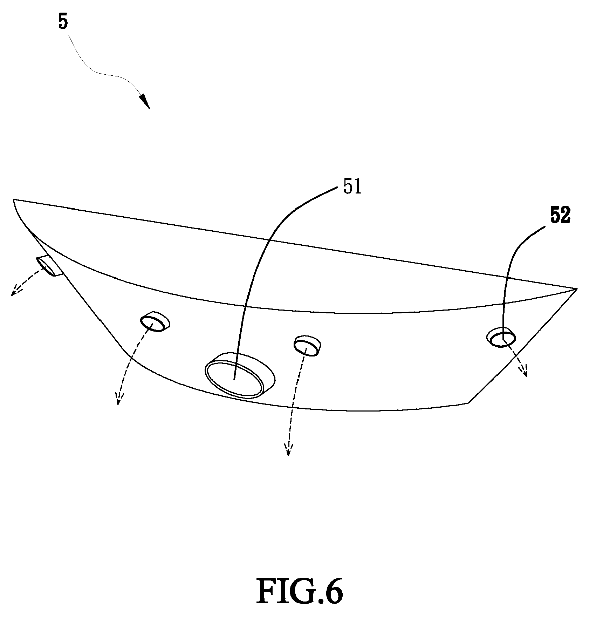

Then, refer to FIG. 6 for a schematic view of a multi-function nozzle used in a bath / sanitary equipment of FIG. 5 according to the present invention. As shown in FIG. 6, the diffusion nozzle 5 is provided with a curved surface, on which is provided with a main hole 51 and a plurality of auxiliary holes 52. Wherein, the main hole 51 can be connected to and in communication with pump (not shown) supplying detergent; while the plurality of auxiliary holes 52 can be connected to and in communication with pump (not shown) supplying clean water. As such, the main hole 51 is able to supply detergent, for the cleaning tool (such as a brush) to clean the contaminant on the inner wall of the toilet; while the auxiliary holes 52 is able to provide water column in diffusion direction, to provide 180 degree cleaning of toilet inner wall.

To facilitate user to perform the functions mentioned above, an operation interface (such as a plurality of push buttons) can be provided. As such, through a control circuit, the operation of the pressuring motor 1, the pump providing detergent, and the pump providing clean water can be selectively controlled, based on the instructions input by the user.

In addition to being used to clean toilet, the pressuring motor 1, the second nozzle 3, or the third nozzle 4 can be used in cooperation to clean human body, wash dishes, and wash car, so that the containment and detergent attached to the human body and dishes can be removed and cleaned speedily. Since water is ejected and sprayed together with air, its speed and washing force are raised, while the amount of water utilized can be reduced.

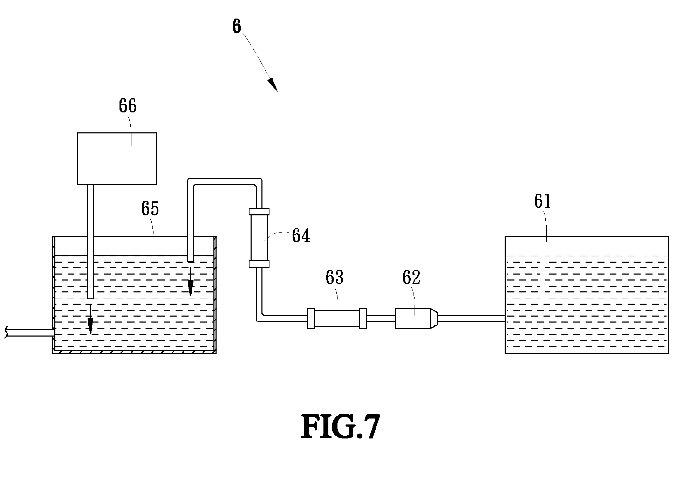

Refer to FIG. 7 for a schematic view of a water purification system used in cooperation with a water spraying apparatus having water saving function according to the present invention. In case the water spraying apparatus having water saving function is used for cleaning human body, the pressuring motor 1 can be used with a water purification system 6 to receive clean water. The water purification system 6 includes: a first water tank 61, a pump unit 62, an ultraviolet sterilization unit 63, an ionization unit 64, a second tank 65, and an ozone generation unit 66.

In the structure mentioned above, the first tank 61 is filled with ordinary faucet water, such the pump unit 62 pumps out the water in the first water tank 61, and supply it to the ultraviolet sterilization unit 63,for processing. The ionization unit 64 performs ionization of water by using magnetic field. In the second water tank 65, the ionized water mixed with the ozone provided by the ozone generation unit 66, to perform sterilization.

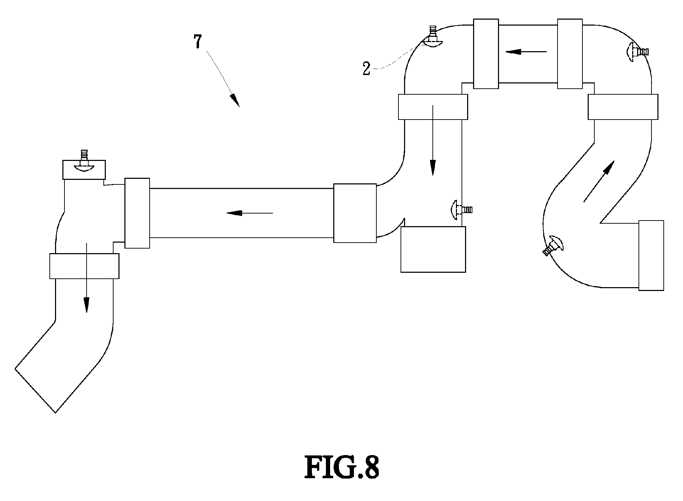

Finally, refer to FIG. 8 for a schematic view of a water spraying apparatus having water saving function used in water drainage pipe according to the present invention. The water spraying apparatus having water saving function can be utilized in a waste drainage pipe 7. Since waste material of various sizes may gather at the turning corners of a waste drainage pipe 7, to cause blocking of pipe. For this reason, the first nozzle 2 can be placed at one or more turning corners of the waste drainage pipe 7, to push the waste material with less amount of water but achieve greater washing force.

Summing up the above, in the water spraying apparatus having water saving function of the present invention, the pressuring motor 1 is used to mix and transport water and air (in such a process, air replaces part of the water to increase pressure for transporting water), then in cooperation with the connected first nozzle 2, the second nozzle 3, and the third nozzle 4, to effectively eject and spray water and air, in achieving various cleaning purpose.

The above detailed description of the preferred embodiment is intended to describe more clearly the characteristics and spirit of the present invention. However, the preferred embodiments disclosed above are not intended to be any restrictions to the scope of the present invention. Conversely, its purpose is to include the various changes and equivalent arrangements which are within the scope of the appended claims.

## Claims

1. A water spraying apparatus having water saving function, comprising:
a pressurized motor, coupled to a water pipe, and is provided with a motor bobbin, to receive power to rotate;
a rotation disc, connected to said motor bobbin in a synchronous rotation manner; and
a plurality of pistons, with its one end pressed against surface of said rotation disc, and through rotation of said rotation disc, to make said plurality of pistons to make reciprocal movement in a short distance;
wherein, said reciprocal movement of said plurality of pistons compresses air in said distance into said water pipe, to mix water and air together for transporting in said water pipe;
a nozzle, connected to and in communication with said water pipe.

2. The water spraying apparatus having water saving function as claimed in claim 1, wherein surface of said rotation disc and axis of said motor bobbin are formed slantwise, to make direction of surface of said rotation disc changes during rotation, and on surface of said rotation disc is embedded a set of magnets of equal or opposite polarity.

3. The water spraying apparatus having water saving function as claimed in claim 2, wherein both ends of said plurality of pistons are provided respectively with a magnet.

4. The water spraying apparatus having water saving function as claimed in any of claims 1 to 3, wherein
in said nozzle is provided with
a first cavity, connected to and in communication with said water pipe; a plurality of cutouts, disposed in a ring shape, and is in communication with said first cavity; and
a second cavity, in communication with said plurality of cutouts, and in communication with a through hole which is in communication with a nozzle, such that when water and air is guided from said first cavity into said second cavity through said plurality of cutouts, water and air flow spirally in said second cavity, and is ejected out spirally from said through hole.

5. The water spraying apparatus having water saving function as claimed in any of claims 1 to 3, wherein
said nozzle is provided with
a Y-shape water channels, wherein one branch is connected to and in communication with said water pipe, other two branches are used to spray out water and air;
an inner cover, to cover output branch of said Y-shape water channels in a rotation and sway manner, and said inner cover provided with a hole penetrating from outside said nozzle to its inside;
when said inner cover performs rotation and sway, it will bring water and air inside said inner cover to eject from said hole in a rotation and sway manner.

6. The water spraying apparatus having water saving function as claimed in claim 5, wherein an inner wall of said inner cover is disposed a plurality of blades in a ring shape.
